# EUROPEAN PATENT APPLICATION

(11) **EP 4 539 000 A1**
(43) Date of publication of application: **16.04.2025**
(21) Application number: 24201223.5
(22) Date of filing: 18.09.2024
(51) Int. Cl.: G06V 40/16, G06V 40/50

(54) **METHODS AND SYSTEM FOR ACCOUNTING FOR AGING FACES IN A FACIAL RECOGNITION SYSTEM USING ARTIFICIAL INTELLIGENCE**

(30) Priority: 13.10.2023 US 202318486890
(71) Applicant: Honeywell International Inc., Charlotte, NC 28202 (US)
(72) Inventor: A, Ramkumar, Charlotte, 28202 (US); LAKSHMANAN, Karthick, Charlotte, 28202 (US); SAMATHANADURAI, Johnson Easuvadiyan, Charlotte, 28202 (US)
(74) Representative: Haseltine Lake Kempner LLP

(57) **Abstract**

A system for performing facial recognition includes a memory for storing a plurality of enrolled facial recognition templates for a plurality of enrolled users, a camera for capturing a current facial image of a person, and a controller that is operatively coupled to the memory and the camera. The controller is configured to determine whether the current facial image of the person matches one of the plurality of enrolled facial recognition templates. When the current facial image of the person matches one of the plurality of enrolled facial recognition templates, the controller is configured to identify the enrolled user of the plurality of enrolled users that matches the current facial image of the person, and to update the enrolled facial recognition template for the matching enrolled user based on the current facial image of the person.

## Description

### TECHNICAL FIELD

The present disclosure relates generally to facial recognition systems and more particularly to accounting for aging faces in facial recognition systems.

### BACKGROUND

A number of systems use facial recognition to identify a person and determine whether that person is authorized to again access to a secure system or area. The secure system or area may be, for example, a secure computer system, a secure banking system, a secure area of a building, and/or any other secure system or area. A facial recognition system may store multiple images of each authorized person, perhaps with each image taken from a different angle, such as a straight-on image, a left profile image, a right profile image, and so on. However, people age. This means that the facial recognition system may become less accurate over time in correctly identifying people. What would be desirable are methods and systems for accounting for the effects of aging in people's faces. What would be desirable are methods and systems that account for aging faces in a facial recognition system using artificial intelligence.

### SUMMARY

The present disclosure relates generally to methods and systems for using facial recognition and more particularly to accounting for aging faces in facial recognition systems. An example may be found in a method for performing facial recognition. The illustrative method includes storing a plurality of enrolled facial recognition templates for a plurality of enrolled users. A current facial image of a person is captured. A current facial recognition template is produced for the person based at least in part on the current facial image of the person. An artificial intelligence (AI) algorithm is executed to determine whether the current facial recognition template for the person matches one of the plurality of enrolled facial recognition templates. The artificial intelligence (AI) algorithm is trained to recognize changes in facial appearance due to aging using a plurality of facial images of a training data set, where the training data set includes facial images that are not facial images of any of the plurality of enrolled users, and is further trained based at least in part on the plurality of enrolled facial recognition templates for the plurality of enrolled users. When the current facial recognition template for the person matches one of the plurality of enrolled facial recognition templates, the enrolled user that corresponds to the matching one of the plurality of enrolled facial recognition templates is identified. The enrolled facial recognition template for the matching enrolled user is updated based on one or more differences between the current facial recognition template and the previous enrolled facial recognition template for the matching enrolled user. The artificial intelligence (AI) algorithm is then retrained using the updated enrolled facial recognition template to refine the artificial intelligence (AI) algorithm's ability to recognize changes in facial appearance due to aging.

Another example may be found in a method for performing facial recognition. The method includes storing a plurality of enrolled facial recognition templates for a plurality of enrolled users. A current facial image of a person is captured and a current facial recognition template is produced for the person based at least in part on the current facial image of the person. An artificial intelligence (AI) algorithm is executed to determine whether the current facial recognition template for the person matches one of the plurality of enrolled facial recognition templates, wherein the artificial intelligence (AI) algorithm is trained to recognize changes in facial appearance due to aging. When the current facial recognition template for the person matches one of the plurality of enrolled facial recognition templates, the enrolled user that corresponds to the matching one of the plurality of enrolled facial recognition templates is identified, the enrolled facial recognition template for the matching enrolled user is updated based on one or more differences between the current facial recognition template and the previous enrolled facial recognition template for the matching enrolled user. The artificial intelligence (AI) algorithm is then retrained using the updated enrolled facial recognition template to refine the artificial intelligence (AI) algorithm's ability to recognize changes in facial appearance due to aging.

Another example may be found in a system for performing facial recognition. The system includes a memory for storing a plurality of enrolled facial recognition templates for a plurality of enrolled users, a camera for capturing a current facial image of a person, and a controller that is operatively coupled to the memory and the camera. The controller is configured to determine whether the current facial image of the person matches one of the plurality of enrolled facial recognition templates. When the current facial image of the person matches one of the plurality of enrolled facial recognition templates, the controller is configured to identify the enrolled user of the plurality of enrolled users that matches the current facial image of the person, and to update the enrolled facial recognition template for the matching enrolled user based on the current facial image of the person.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative system for performing facial recognition;
Figures 2A and 2B are flow diagrams that together show an illustrative method for performing facial recognition;
Figures 3A and 3B are flow diagrams that together show an illustrative method for performing facial recognition; and
Figure 4 is a flow diagram showing an illustrative method.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

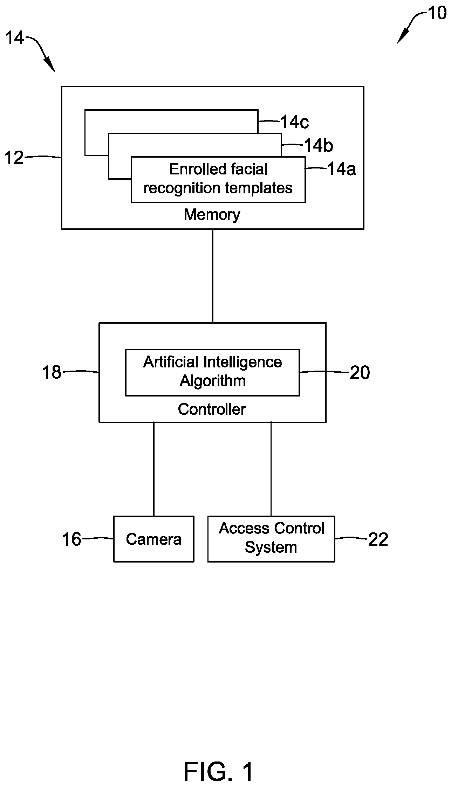

Figure 1 is a schematic block diagram showing an illustrative system 10 for performing facial recognition. The illustrative system 10 includes a memory 12 for storing a plurality of enrolled facial recognition templates 14 for a plurality of enrolled users. The enrolled facial recognition templates 14 are individually labeled as 14a, 14b and 14c. While a total of three enrolled facial recognition templates 14 are shown, it will be appreciated that there may be considerably more than three enrolled facial recognition templates 14, particularly if the system 10 is for an access control system 22 that is installed in a large facility. The system 10 includes a camera 16 for capturing a current facial image of a person. In some instances, the camera 16 may be installed adjacent a controlled door or gate, for example, in order to capture images of people as they approach the door or gate. While a single camera 16 is shown, in some instances there may be a large number of cameras 16, with each camera 16 installed adjacent a controlled door or access region. In the example shown, a controller 18 is operatively coupled to the memory 12 and to the camera 16. In some instances, the controller 18 includes or is configured to execute an artificial intelligence (AI) algorithm 20.

The controller 18 is configured to determine whether a current facial image of a person captured by the camera 16 matches one of the plurality of enrolled facial recognition templates 14. When the current facial image of the person matches one of the plurality of enrolled facial recognition templates 14, the controller 18 is configured to identify the enrolled user of the plurality of enrolled users that matches the current facial image of the person and to update the enrolled facial recognition template for the matching enrolled user based on the current facial image of the person.

In some instances, the controller 18 is configured to execute the AI algorithm 20 in order to determine whether the current facial image of the person matches one of the plurality of enrolled facial recognition templates 14. In some instances, the AI algorithm 20 may be trained to recognize changes in facial appearance due to aging using a plurality of facial images of a training data set. The training data set may include facial images that are not facial images of any of the plurality of enrolled users. In some instances, training data set may include the VGGFace and/or VGGFace2 Dataset. The AI algorithm 20 may also be trained based at least in part on the plurality of enrolled facial recognition templates 14 for the plurality of enrolled users. When the current facial image of the person matches one of the plurality of enrolled facial recognition templates 14, the controller 18 may retrain the AI algorithm 20 using the updated enrolled facial recognition template to refine the artificial intelligence (AI) algorithm's ability to recognize changes in facial appearance due to aging, including for the enrolled user that matches the current facial image of the person and in some cases for other enrolled users.

In some instances, the system 10 may be configured to support an access control system 22 that controls access to a secure or restricted area. In some instances, the camera 16 may be installed adjacent the access control system 22 so that the camera 16 is positioned to capture facial images of each person attempting or otherwise desiring access to the secure or restricted area. The camera 16 may be positioned to capture facial images of each person approaching a door or gate that restricts access to the secure or restricted area when locked yet allows entry into the secure or restricted area by unlocking the door or gate when the approaching person is identified and has appropriate access rights to gain access to the secure or restricted area. When the current facial image of the person matches one of the plurality of enrolled facial recognition templates 14, the controller 18 may be configured to determine whether the matching enrolled user has access rights to the corresponding secure area, and if so, the controller 18 may control the access control system 22 to allow the matching enrolled user to access the secure area.

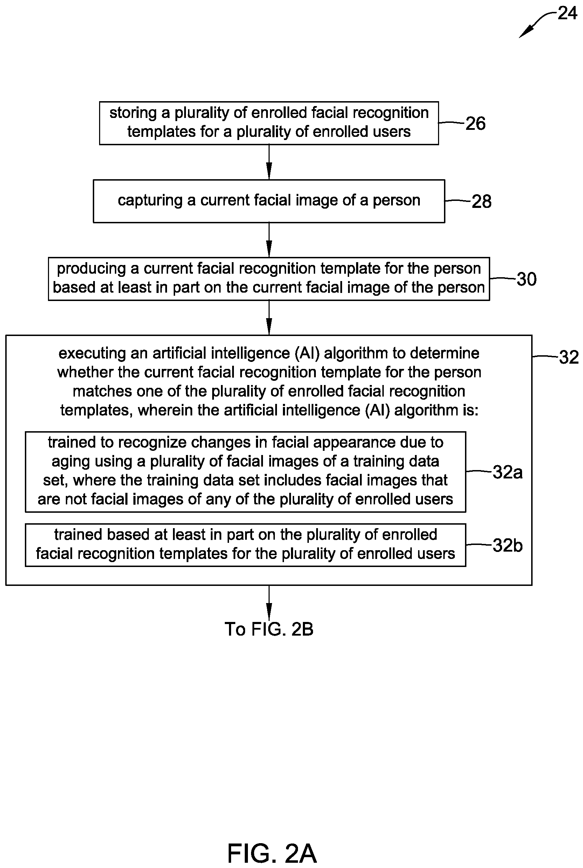

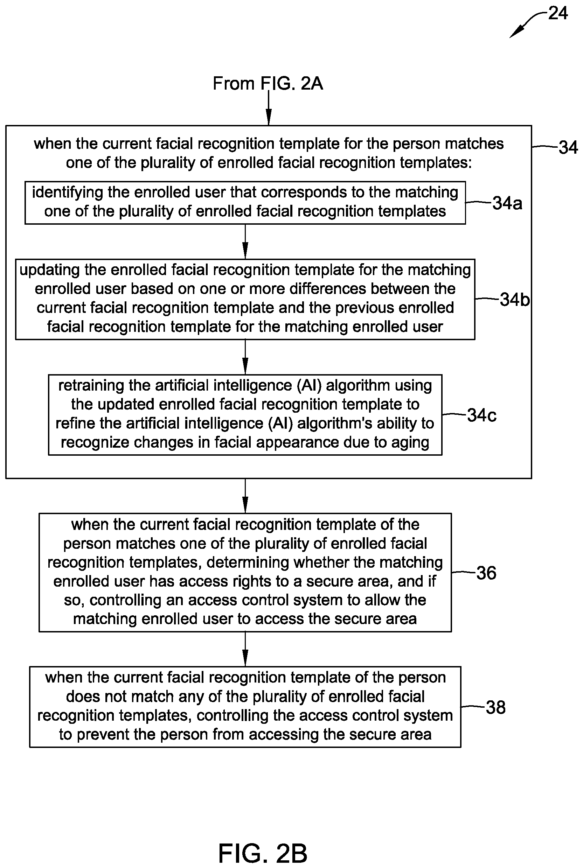

Figures 2A and 2B are flow diagrams that together show an illustrative method 24 for performing facial recognition. The illustrative method 24 includes storing a plurality of enrolled facial recognition templates for a plurality of enrolled users, as indicated at block 26. The facial recognition template for any particular enrolled user may be based on one facial image of the enrolled user or multiple facial images of the enrolled user such as a straight-on image, a left profile image, a right profile image, and so on.

A current facial image of a person is captured, as indicated at block 28. A current facial recognition template is produced for the person based at least in part on the current facial image of the person, as indicated at block 30. In some instances, producing the current facial recognition template for the person may include transforming the current facial image of the person into the current facial recognition template for the person. In some instances, transforming the current facial image of the person into the current facial recognition template may include extracting one or more characteristics from the current facial image of the person and providing the extracted one or more characteristics to the current facial recognition template. As an example, the one or more characteristics may correspond to one or more facial features of the person (e.g. distance between the eyes, depth of the eye sockets, distance from the forehead to the chin, shape of the cheekbones, contour of the lips, ears, and/or chin). These are just examples.

An artificial intelligence (AI) algorithm is executed to determine whether the current facial recognition template for the person matches one of the plurality of enrolled facial recognition templates, as indicated at block 32. The AI algorithm is trained to recognize changes in facial appearance due to aging using a plurality of facial images of a training data set, where the training data set includes facial images that are not facial images of any of the plurality of enrolled users, as indicated at block 32a. In some instances, the training data set may be a large-scale data set that includes facial images with annotations of age, gender and ethnicity. The training data set may be generated internally using captured images of people. The training data set may be obtained commercially, for example. In some instances, training data set may include the VGGFace and/or VGGFace2 Dataset. The AI algorithm is also trained based at least in part on the plurality of enrolled facial recognition templates for the plurality of enrolled users, as indicated at block 32b.

The method 24 continues on Figure 2B. When the current facial recognition template for the person matches one of the plurality of enrolled facial recognition templates, the method 24 includes several illustrative actions, as indicated at block 34. The actions include identifying the enrolled user that corresponds to the matching one of the plurality of enrolled facial recognition templates, as indicated at block 34a. The actions include updating the enrolled facial recognition template for the matching enrolled user based on one or more differences between the current facial recognition template and the previous enrolled facial recognition template for the matching enrolled user, as indicated at block 34b. The actions include retraining the artificial intelligence (AI) algorithm using the updated enrolled facial recognition template to refine the artificial intelligence (AI) algorithm's ability to recognize changes in facial appearance due to aging, as indicated at block 34c.

In some instances, the plurality of enrolled facial recognition templates and the updated enrolled facial recognition template may each include a timestamp, and two or more of the timestamps may be used to retrain the artificial intelligence (AI) algorithm to refine the artificial intelligence (AI) algorithm's ability to recognize changes in facial appearance due to aging. As an example, a difference between the timestamp of the update enrolled facial recognition template and the timestamp of the previous enrolled facial recognition template may represent an aging time difference of the enrolled user and may be used to refine the artificial intelligence (AI) algorithm's ability to recognize changes in facial appearance due to aging.

In some instances, the method 24 may further include, when the current facial recognition template of the person matches one of the plurality of enrolled facial recognition templates, determining whether the matching enrolled user has access rights to a secure area, and if so, controlling an access control system to allow the matching enrolled user to access the secure area, as indicated at block 36. In some instances, when the current facial recognition template of the person does not match any of the plurality of enrolled facial recognition templates, the method 24 may control the access control system to prevent the person from accessing the secure area, as indicated at block 38.

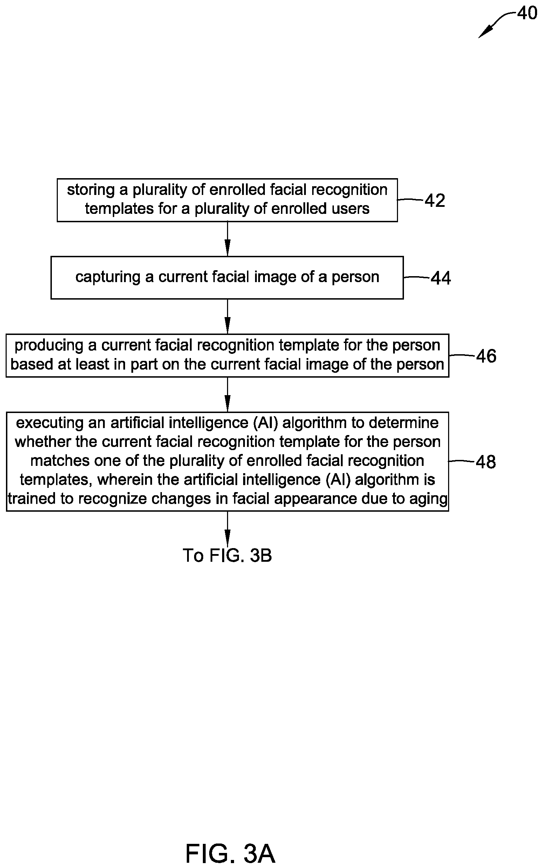

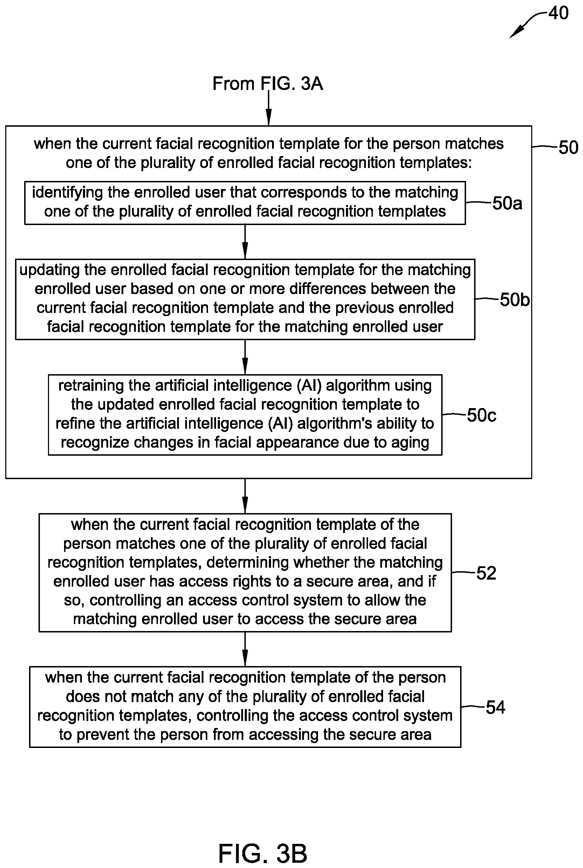

Figures 3A and 3B are flow diagrams that together show an illustrative method 40 for performing facial recognition. The method 40 includes storing a plurality of enrolled facial recognition templates for a plurality of enrolled users, as indicated at block 42. A current facial image of a person is captured, as indicated at block 44. A current facial recognition template for the person is produced based at least in part on the current facial image of the person, as indicated at block 46. In some instances, producing the current facial recognition template for the person may include transforming the current facial image of the person into the current facial recognition template for the person. In some instances, transforming the current facial image of the person into the current facial recognition template for the person may include extracting one or more characteristics of the current facial image and providing the extracted one or more characteristics to the current facial recognition template. As an example, the one or more characteristics may correspond to one or more facial features of the person (e.g. distance between the eyes, depth of the eye sockets, distance from the forehead to the chin, shape of the cheekbones, contour of the lips, ears, and/or chin). These are just examples. An artificial intelligence (AI) algorithm is executed to determine whether the current facial recognition template for the person matches one of the plurality of enrolled facial recognition templates, wherein the artificial intelligence (AI) algorithm is trained to recognize changes in facial appearance due to aging, as indicated at block 48.

The method 40 continues on Figure 3B. When the current facial recognition template for the person matches one of the plurality of enrolled facial recognition templates, several illustrative actions are taken, as indicated at block 50. The actions include identifying the enrolled user that corresponds to the matching one of the plurality of enrolled facial recognition templates, as indicated at block 50a. The actions include updating the enrolled facial recognition template for the matching enrolled user based on one or more differences between the current facial recognition template and the previous enrolled facial recognition template for the matching enrolled user, as indicated at block 50b. The actions include retraining the artificial intelligence (AI) algorithm using the updated enrolled facial recognition template to refine the artificial intelligence (AI) algorithm's ability to recognize changes in facial appearance due to aging, as indicated at block 50c. In some instances, the plurality of enrolled facial recognition templates and the updated enrolled facial recognition template each include a timestamp, and two or more of the timestamps may be used to retrain the artificial intelligence (AI) algorithm to refine the artificial intelligence (AI) algorithm's ability to recognize changes in facial appearance due to aging.

In some instances, when the current facial recognition template of the person matches one of the plurality of enrolled facial recognition templates, the method 40 may include determining whether the matching enrolled user has access rights to a secure area, and if so, controlling an access control system to allow the matching enrolled user to access the secure area, as indicated at block 52. In some instances, when the current facial recognition template of the person does not match any of the plurality of enrolled facial recognition templates, the method 40 includes controlling the access control system to prevent the person from accessing the secure area, as indicated at block 54.

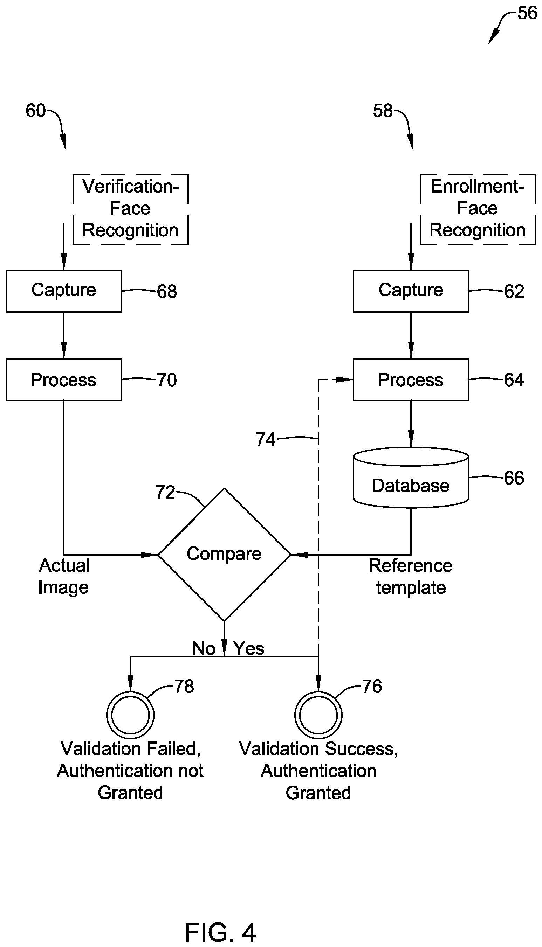

Figure 4 is a flow diagram showing an illustrative method 56 for performing facial recognition. As can be seen, the method 56 includes an enrollment phase 58 and a verification phase 60. In the enrollment phase 58, a camera captures facial images, as indicated at block 62. The facial images may include one facial image for each enrollee, or multiple facial images for each enrollee. For example, the multiple facial images for each enrollee may include, for example, a straight-on image, a left profile image, a right profile image, an image with glasses on, an image with a hat on, and so on. The facial images are processed, as indicated at block 64. This may include producing an enrolled facial recognition template for each of the enrolled persons. The results are stored in a database, as indicated at block 66.

In the verification phase 60, a camera captures a facial image, as indicated at block 68. The facial image is processed, as indicated at block 70. In some cases, the facial image is compared with the enrolled facial recognition templates to determine whether there is a match, as indicated at a decision block 72. In some cases, the facial image is processed to produce a current facial recognition template, and the current facial recognition template is compared with the enrolled facial recognition templates to determine whether there is a match. In either case, if there is a match, the person is authenticated as shown at 76, and the AI will update the matched enrolled facial recognition template based on features extracted from the facial image captured by the camera at block 68, as indicated by a dotted line 74. If there is no match, the person is not authenticated, as indicated at block 78.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for performing facial recognition, the method comprising:
storing a plurality of enrolled facial recognition templates for a plurality of enrolled users;
capturing a current facial image of a person;
producing a current facial recognition template for the person based at least in part on the current facial image of the person;
executing an artificial intelligence (Al) algorithm to determine whether the current facial recognition template for the person matches one of the plurality of enrolled facial recognition templates, wherein the artificial intelligence (Al) algorithm is:
trained to recognize changes in facial appearance due to aging using a plurality of facial images of a training data set, where the training data set includes facial images that are not facial images of any of the plurality of enrolled users;
trained based at least in part on the plurality of enrolled facial recognition templates for the plurality of enrolled users;
when the current facial recognition template for the person matches one of the plurality of enrolled facial recognition templates:
identifying the enrolled user that corresponds to the matching one of the plurality of enrolled facial recognition templates;
updating the enrolled facial recognition template for the matching enrolled user based on one or more differences between the current facial recognition template and the previous enrolled facial recognition template for the matching enrolled user; and
retraining the artificial intelligence (Al) algorithm using the updated enrolled facial recognition template to refine the artificial intelligence (Al) algorithm's ability to recognize changes in facial appearance due to aging.

2. The method of claim 1, wherein when the current facial recognition template of the person matches one of the plurality of enrolled facial recognition templates, determining whether the matching enrolled user has access rights to a secure area, and if so, controlling an access control system to allow the matching enrolled user to access the secure area.

3. The method of claim 2, wherein when the current facial recognition template of the person does not match any of the plurality of enrolled facial recognition templates, controlling the access control system to prevent the person from accessing the secure area.

4. The method of claim 1, wherein the plurality of enrolled facial recognition templates and the updated enrolled facial recognition template each include a timestamp, wherein two or more of the timestamps are used to retrain the artificial intelligence (Al) algorithm to refine the artificial intelligence (Al) algorithm's ability to recognize changes in facial appearance due to aging.

5. The method of claim 4, wherein a difference between the timestamp of the update enrolled facial recognition template and the timestamp of the previous enrolled facial recognition template represents an aging time difference of the enrolled user and are used to refine the artificial intelligence (Al) algorithm's ability to recognize changes in facial appearance due to aging.

6. The method of claim 1, wherein producing the current facial recognition template for the person comprises transforming the current facial image of the person into the current facial recognition template for the person.

7. The method of claim 6, wherein transforming the current facial image of the person into the current facial recognition template for the person comprises extracting one or more characteristics from the current facial image and providing the extracted one or more characteristics to the current facial recognition template.

8. The method of claim 7, wherein the one or more characteristics correspond to one or more facial features of the person.

9. The method of claim 1, wherein the training data set is a large-scale data set that includes facial images with annotations of age, gender and ethnicity.

10. A system for performing facial recognition, the system comprising:
a memory for storing a plurality of enrolled facial recognition templates for a plurality of enrolled users;
a camera for capturing a current facial image of a person;
a controller operatively coupled to the memory and the camera, the controller configured to:
determine whether the current facial image of the person matches one of the plurality of enrolled facial recognition templates;
when the current facial image of the person matches one of the plurality of enrolled facial recognition templates:
identify the enrolled user of the plurality of enrolled users that
matches the current facial image of the person; and update the enrolled facial recognition template for the matching
enrolled user based on the current facial image of the person.

11. The system of claim 10, wherein the controller is configured to execute an artificial intelligence (Al) algorithm to determine whether the current facial image of the person matches one of the plurality of enrolled facial recognition templates.

12. The system of claim 11, wherein the artificial intelligence (Al) algorithm is:
trained to recognize changes in facial appearance due to aging using a plurality of facial images of a training data set, where the training data set includes facial images that are not facial images of any of the plurality of enrolled users; and
trained based at least in part on the plurality of enrolled facial recognition templates for the plurality of enrolled users.

13. The system of claim 11, wherein when the current facial image of the person matches one of the plurality of enrolled facial recognition templates, the controller is configured to retrain the artificial intelligence (Al) algorithm using the updated enrolled facial recognition template to refine the artificial intelligence (Al) algorithm's ability to recognize changes in facial appearance due to aging.

14. The system of claim 10 further comprising an access control system to control access to a secure area, wherein when the current facial image of the person matches one of the plurality of enrolled facial recognition templates, the controller is configured to determine whether the matching enrolled user has access rights to a secure area, and if so, control the access control system to allow the matching enrolled user to access the secure area.

15. The system of claim 10, wherein when the current facial recognition template of the person matches one of the plurality of enrolled facial recognition templates, the controller determines whether the matching enrolled user has access rights to a secure area, and if so, control an access control system to allow the matching enrolled user to access the secure area.
